# EUROPÄISCHE PATENTSCHRIFT

(11) **EP 2 158 112 B1**
(45) Veröffentlichungstag und Bekanntmachung des Hinweises auf die Patenterteilung: **22.05.2013**
(21) Anmeldenummer: 08759955.1
(22) Anmeldetag: 23.05.2008
(51) Int. Cl.: B60T 7/22, B60W 30/08

(54) **VERFAHREN ZUR EINSTELLUNG EINER BREMSANLAGE IN EINEM FAHRZEUG IM FALLE EINER KOLLISION**
METHOD FOR ADJUSTING A BRAKE SYSTEM IN A VEHICLE IN THE EVENT OF A COLLISION
PROCÉDÉ POUR LE RÉGLAGE DU SYSTÈME DE FREINAGE D'UN VÉHICULE EN CAS DE COLLISION

(30) Priorität: 04.06.2007 DE 102007025960
(43) Veröffentlichungstag der Anmeldung: 03.03.2010
(73) Patentinhaber: Robert Bosch GmbH, 70442 Stuttgart (DE)
(72) Erfinder: STABREY, Stephan, 70174 Stuttgart (DE)
(86) Internationale Anmeldenummer: PCT/EP2008/056354
(87) Internationale Veröffentlichungsnummer: WO 2008/148651

(56) Entgegenhaltungen:
- EP-A- 1 659 006
- WO-A-2006/050741
- DE-A1- 10 004 088
- DE-A1- 10 108 879
- DE-A1- 10 231 558
- DE-A1- 19 753 971
- DE-A1-102004 058 663
- DE-A1-102004 058 814

## Beschreibung

Die Erfindung bezieht sich auf ein Verfahren zur Einstellung einer Bremsanlage in einem Fahrzeug nach dem Oberbegriff des Anspruches 1.

### Stand der Technik

In der DE 10 2004 058 814 A1 wird ein Verfahren zur Steuerung der Bremsanlage eines Kraftfahrzeugs beschrieben, bei dem im Falle einer Kollision ein fahrerunabhängiger Bremseingriff durchgeführt wird. Die Intensität des Bremseingriffs kann von verschiedenen Einflussgrößen abhängen, unter anderem von der aktuellen Fahrzeuggeschwindigkeit unmittelbar nach dem Aufprall und der Schwere der Kollision. Ist beispielsweise das Fahrzeug nach der Kollision durch den Fahrer nicht mehr beherrschbar, so kann eine Vollbremsung durchgeführt werden. Bei einer geringeren Schwere der Kollision kann andererseits die Geschwindigkeit auf einen Schwellenwert reduziert werden, ohne das Fahrzeug zum Stillstand zu bringen, um dem Fahrer die Möglichkeit offen zu halten, das Fahrzeug aus dem Unfallbereich zu entfernen.

Aus der DE 10 2004 058 663 A1 ist eine Kollisionsdetektionseinrichtung bekannt, bei der eine Kollision des Fahrzeuges anhand einer unstetigen Änderung der Raddrehgeschwindigkeiten aller Fahrzeugräder erkannt wird. Die Kollisionsdetektionseinrichtung ist in einen Verfahrensablauf eingebettet, bei dem die Detektierung einer Kollision einen von mehreren Schritten darstellt. Bei dem Verfahren sollen die Unfallfolgen durch frühzeitiges Erkennen einer bevorstehenden Kollision und Auslösen einer Notbremsung gemindert werden. Die Kollisionsdetektionseinrichtung kommt erst nach dem Auslösen der Notbremsung zum Einsatz, wobei im Falle einer erfolgten Kollision das Verfahren beendet wird.

Aus der DE 101 08 879 A1 ist es bekannt, einen kurz bevorstehenden oder bereits erfolgten Aufprall eines Fahrzeuges anhand hoher Verzögerungswerte festzustellen und im Anschluss hieran über eine Steuereinrichtung die Fahrzeugbremsen bis zur Aktivierung eines Antiblockiersystems oder elektronischen Fahrstabilisierungssystems anzusteuern. Hierdurch soll die Lenkfähigkeit des Fahrzeugs gewährleistet werden.

Aus der DE 100 04 088 A1 ist es bekannt, bei einem Auffahrunfall am auffahrenden Fahrzeug das Antiblockiersystem abzuschalten, um zu verhindern, dass das Antiblockiersystem aufgrund des massiven Anstiegs der Radverzögerung den Bremsdruck absenkt. Durch das Abschalten des Antiblockiersystems steht der volle Bremsdruck zur Verfügung, wobei auch ein Blockieren der Räder in Kauf genommen wird.

### Offenbarung der Erfindung

Von diesem Stand der Technik ausgehend liegt der Erfindung die Aufgabe zugrunde, die Unfallfolgen nach einer Kollision des Fahrzeugs so gering wie möglich zu halten. Vorteilhafterweise soll eine fahrerunabhängige Bremsung im Falle eines beschädigten Fahrzeugs so ausgeführt werden, dass negative Auswirkungen der Beschädigung auf die Stabilität reduziert werden.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren zur Einstellung einer Bremsanlage in einem Fahrzeug, insbesondere in einem Kraftfahrzeug, wird zunächst festgestellt, ob ein Unfall bzw. eine Kollision vorliegt. Trifft dies zu, so wird überprüft, ob die Raddrehzahl wenigstens eines Rades z. B. durch ein Einklemmen im Radkasten aufgrund der Fahrzeugdeformation reduziert ist, woraufhin ein fahrerunabhängiger Bremseingriff durchgeführt und mindestens ein weiteres Rad im Fahrzeug abgebremst wird. Auf diese Weise ist es möglich, das Fahrverhalten bzw. die Fahrdynamik gezielt zu beeinflussen, insbesondere die Destabilisierung des Fahrzeugs durch das eingeklemmte Rad zu vermindern und so ggf. ein unkontrolliertes Ausbrechen des Fahrzeuges zu verhindern. Hierbei kann entweder einer Geschwindigkeitsreduzierung des Fahrzeuges oder der Stabilität der Vorzug gegeben werden. Zweckmäßigerweise wird der Bremseingriff in der Weise durchgeführt, dass zunächst das Fahrzeug stabilisiert und anschließend die Fahrzeuggeschwindigkeit reduziert wird.

Die Überprüfung, ob eine unzulässig hohe Reduzierung der Raddrehzahl des defekten Rades vorliegt, erfolgt anhand eines Vergleiches mit einem Drehzahlreduktionsgrenzwert. Überschreitet die Reduzierung der Raddrehzahl eines einzelnen Rades - oder mehrerer Räder - diesen Drehzahlreduktionsgrenzwert oder ist das Rad blockiert, so erfolgt der fahrerunabhängige Bremseingriff. Der Drehzahlreduktionsgrenzwert wird beispielsweise über einen Vergleich der Raddrehzahlen von mindestens zwei, vorteilhafterweise von allen vier Rädern bestimmt; hierzu kann ein Mittelwert der aktuellen Raddrehzahlen aufgestellt werden, wobei der Drehzahlreduktionsgrenzwert als definierte Abweichung gegenüber dem Mittelwert festgelegt wird.

Die Reduzierung der Raddrehzahl mittels des fahrerunabhängigen Bremseingriffes kann beispielsweise in der Weise erfolgen, dass die Raddrehzahl mindestens eines weiteren Rades, insbesondere eines intakten Rades, auf die Raddrehzahl des defekten Rades reduziert wird. Zur Minderung der destabilisierenden Wirkung des blockierten Rades kann es hierbei zweckmäßig sein, das gegenüberliegende Rad an der gleichen Achse wie das defekte Rad abzubremsen, um das destabilisierende Giermoment zu reduzieren bzw. ganz zu kompensieren. Grundsätzlich ist es aber auch möglich, zusätzlich oder alternativ eines oder beide Räder an der anderen Achse abzubremsen.

Außerdem ist auch eine Abbremsung auf eine andere Raddrehzahl als die Raddrehzahl des defekten Rades möglich.

Gemäß einer weiteren, bevorzugten Ausführung wird festgestellt, ob das defekte Rad blockiert, also eine Raddrehzahl gleich Null aufweist. Für diesen Fall kann es vorteilhaft sein, das gegenüberliegende Rad der gleichen Achse über den fahrerunabhängigen Bremseingriff ebenfalls zum Blockieren zu bringen, wodurch unerwünschte Giermomente vermieden werden. Darüber hinaus können die Räder der jeweils anderen Achse ebenfalls abgebremst, ggf. bis zum Blockieren abgebremst werden, oder aber auch ungebremst bleiben, wobei die Abbremsung zu einem schnelleren Stillstand des Fahrzeuges führt und das Nicht-Abbremsen die Fahrzeugstabilität verbessert.

Gemäß einer weiteren vorteilhaften Ausführung wird mittels der Fahrzeugsensorik die Kollisionsrichtung und/oder die Kollisionsschwere ermittelt, um hieraus Erkenntnisse für den fahrerunabhängigen Bremseingriff ziehen zu können. So kann beispielsweise unterschieden werden zwischen einer Frontkollision und einer Heckkollision sowie zwischen seitlichen Kollisionen bzw. seitlich versetzten Front- bzw. Heckkollisionen. In Abhängigkeit der erkannten Kollision werden beispielsweise einzelne Räder an der Vorderachse bzw. der Hinterachse abgebremst, außerdem kann der Ort und die Schwere der Kollision auch zur Plausibilisierung eines erkannten Raddefektes herangezogen werden, um insbesondere ausschließen zu können, dass die Information über eine Raddrehzahlreduzierung bzw. ein Blockieren des Rades auf einen Defekt des Raddrehzahlsensors zurückgeht. Hierzu kann auf Basis der Informationen eines Airbagsystems aus der Crashschwere und dem Auftreffort die Fahrzeugverformung abgeschätzt werden. Ab einer gewissen Verformung ist ein Einklemmen eines Rades sehr wahrscheinlich. Zur Plausibilisierung eines über einen Raddrehzahlsensor erkannten Raddefektes kann zusätzlich oder alternativ zur Kollisionsrichtung und Kollisionsschwere auch der Reifendruck herangezogen werden, der mithilfe eines Reifendrucksensors bestimmt wird, da mit der Beschädigung eines Rades oft auch ein Reifendruckverlust einhergeht.

Auf Front- oder Heckkollision wird, wie bereits oben angedeutet, beispielsweise durch unterschiedliches Abbremsen der Räder der Fahrzeugachsen reagiert, indem bei einer versetzten Frontkollision mit Beschädigung eines vorderen Fahrzeugrades beispielsweise nur das nicht defekte, gegenüberliegende vordere Fahrzeugrad abgebremst wird, wohingegen die hinteren Fahrzeugräder nicht oder nur mit reduzierter Bremskraft abgebremst werden, um die Fahrzeugstabilität aufrecht zu erhalten. Im Falle einer versetzten Heckkollision mit einer Blockade eines hinteren Fahrzeugrades ist dagegen das Fahrzeug aufgrund der deutlich reduzierten Seitenkraft an der Hinterachse schwer oder gar nicht mehr zu stabilisieren, so dass in dieser Situation das gegenüberliegende, nicht defekte Hinterrad ebenfalls blockiert wird, um das Giermoment zu kompensieren und vorteilhafterweise auch die Vorderräder stark abgebremst, ggf. blockiert werden, um das Fahrzeug schnellstmöglich zum Stillstand zu bringen.

Des Weiteren kann es zweckmäßig sein, nach einer erkannten Kollision das Bremsflüssigkeitseinlassventil des beschädigten Rades selbsttätig zu schließen, da bei einem Unfall eine erhöhte Wahrscheinlichkeit besteht, dass die Bremsleitung des defekten Rades beschädigt ist, so dass mit dem Schließen des Bremsventils ein Bremsflüssigkeitsverlust im Bremssystem vermieden wird. Hierdurch wird ein ausreichend hoher Bremsdruck im System zum Abbremsen eines oder mehrerer übriger Räder sichergestellt.

Das erfindungsgemäße Verfahren kann mit einem ESP-System (elektronisches Stabilitätsprogramm) im Fahrzeug durchgeführt werden, wobei auch die Sensorik des ESP-Systems genutzt werden kann, also insbesondere die Raddrehzahlsensoren sowie ggf. auch der Gierratensensor. Das ESP-Steuergerät, in welchem das erfindungsgemäße Verfahren hinterlegt ist, wird zweckmäßig einschließlich des ESPeigenen Hydraulikaggregats in der Fahrzeugmitte positioniert, beispielsweise unter dem Mitteltunnel des Fahrzeuges, um eine Beschädigung im Falle einer front- oder heckseitigen Kollision des Fahrzeuges zu vermeiden.

Des Weiteren kann es vorteilhaft sein, die Sensorik eines Airbagsystems für das erfindungsgemäße Verfahren zu nutzen. Diese umfassen unter anderem so genannte Upfront-Sensoren (Beschleunigungssensoren in der Fahrzeugfront), mit deren Hilfe Informationen über Auftreffort und Kollisionsschwere ermittelt werden können, auf deren Basis auch die Fahrzeugverformung abgeschätzt werden kann.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Kraftfahrzeugs, das mit einem ESP-System und einem Airbagsystem einschließlich der dazugehörenden Sensorik ausgestattet ist,
- Fig. 2: ein beispielhaftes Ablaufdiagramm mit den Verfahrensschritten zur Durchführung eines fahrerunabhängigen Bremseingriffes im Falle einer Kollision und eines blockierten Rades.

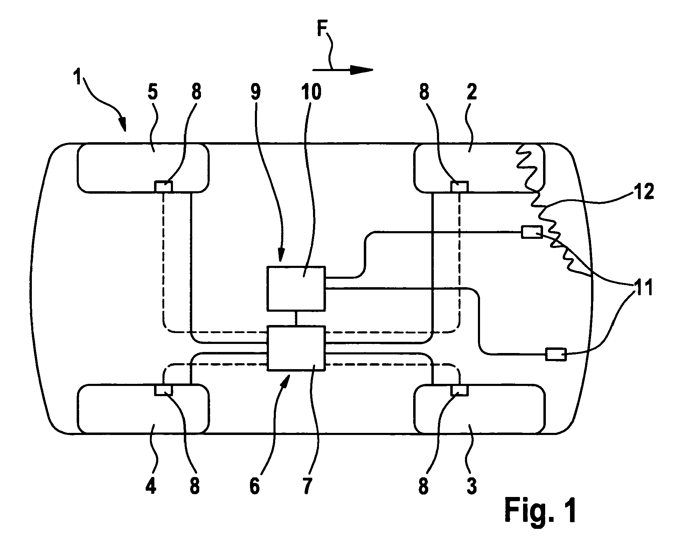

Bei dem in Fig. 1 dargestellten Fahrzeug 1 ist die Fahrzeugvorwärtsrichtung mit F dargestellt. Das vordere linke, das vordere rechte, das hintere rechte und das hintere linke Fahrzeugrad sind mit den Bezugszeichen 2 bis 5 gekennzeichnet. Das Fahrzeug 1 ist mit einem ESP-System 6 ausgestattet, das ein ESP-Steuergerät 7 umfasst, welches zweckmäßigerweise etwa in der Fahrzeugmitte in der Nähe des Fahrzeugschwerpunktes positioniert ist, um im Falle einer Kollision nicht beschädigt zu werden. Dem ESP-System 6 ist außerdem ein Hydraulikaggregat zugeordnet, welches vorteilhaft benachbart zum Steuergerät 7 angeordnet ist. Des Weiteren gehören zum ESP-System 6 Raddrehzahlsensoren 8 an jedem Fahrzeugrad 2 bis 5. Darüber hinaus kann das ESP-System auch einen Gierratensensor umfassen.

Im Fahrzeug 1 ist außerdem ein Airbagsystem 9 angeordnet, das ein Airbagsteuergerät 10 sowie so genannte Upfront-Sensoren 11 umfasst, bei denen es sich um im vorderen Fahrzeugbereich angeordnete Beschleunigungssensoren handelt, über die sowohl die Kollisionsrichtung als auch die Kollisionsschwere einer Fahrzeugkollision ermittelbar ist. Auch im Heckbereich sowie ggf. im Seitenbereich können zusätzliche Sensoren vorgesehen sein. In der Regel verfügt auch das AirbagSteuergerät 9 über eingebaute Beschleunigungssensoren, mit denen sich eine Kollision erkennen lässt. In Fig. 1 ist beispielhaft mit Bezugszeichen 12 eine Crashlinie im linken Frontbereich eingezeichnet, die den deformierten äußeren Karosseriebereich nach einer seitlich versetzten Frontalkollision darstellt. Diese Deformation der Karosserie kann über die Upfront-Sensoren 11 festgestellt werden.

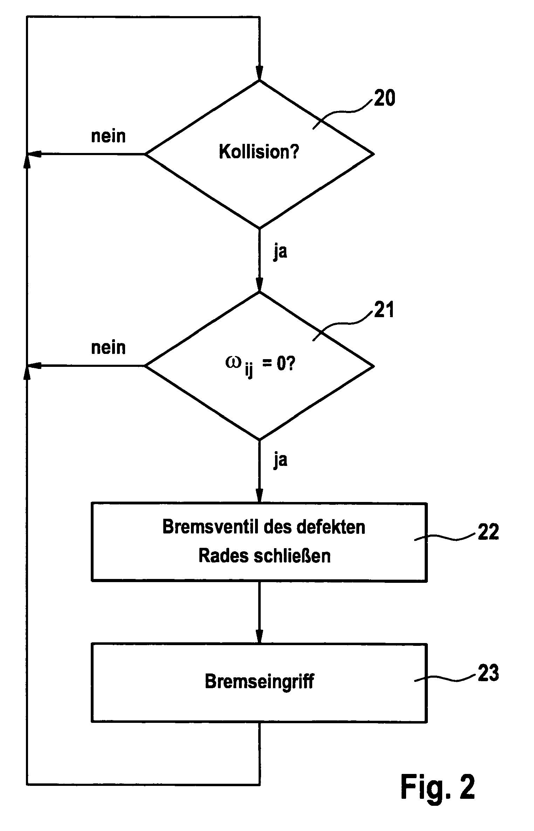

In Fig. 2 ist der Ablauf des Verfahrens zur Einstellung der Bremsanlage im Kraftfahrzeug in schematisch grob skizzierter Weise dargestellt. Zunächst wird im Verfahrensschritt 20 überprüft, ob eine Kollision vorliegt. Dies erfolgt durch Auswertung der Sensorsignale des Airbagsystems. Ergibt die Abfrage im Verfahrensschritt 20, dass keine Kollision vorliegt, wird der nein-Verzweigung folgend wieder zum Beginn des Verfahrens zurückgekehrt und in zyklischen Abständen eine erneute Überprüfung durchgeführt. Möglich ist auch ein Verfahrensstart über Interrupts.

Ergibt dagegen die Auswertung der Sensorsignale, die insbesondere als Beschleunigungswerte vorliegen, dass eine Kollision vorliegt, so wird der ja-Verzweigung folgend zum nächsten Verfahrensschritt 21 fortgefahren. Durch Auswertung der Sensorsignale der Upfront-Sensoren kann zudem der Auftreffort und ggf. auch die Kollisionsschwere festgestellt werden. In Abhängigkeit des Auftreffortes und der Kollisionsschwere kann entschieden werden, ob bei der vorliegenden Kollision davon auszugehen ist, das die Radkästen durch die Deformation in Mitleidenschaft gezogen wurden. Gegebenenfalls sind einen Aufprall detektierende Sensoren nicht nur im Frontbereich, sondern auch im Seitenbereich und/oder im Heckbereich des Fahrzeugs angeordnet.

Liegt eine derartige Kollision mit einer definierten Mindestschwere vor, so wird im nächsten Verfahrensschritt 21 überprüft, ob eines der Fahrzeugräder blockiert. Hierzu werden die Informationen der Raddrehzahlsensoren ausgewertet und eine Überprüfung durchgeführt, ob die Raddrehzahlen ωᵢⱼ = 0 sind. Dies kann entweder systematisch für alle Fahrzeugräder durchgeführt werden oder aber lediglich für dasjenige Rad, das von der Kollision betroffen ist, was anhand der zuvor im Verfahrensschritt 20 ermittelten Informationen feststellbar ist.

Ergibt die Überprüfung im Verfahrensschritt 21, dass keines der Fahrzeugräder blockiert, wird der nein-Verzweigung folgend wieder zum Beginn des Verfahrens zurückgekehrt Im Falle einer Blockade eines Fahrzeugrades wird dagegen der ja-Verzweigung folgend zum nächsten Verfahrensschritt 22 fortgefahren, in dem als Konsequenz bzw. Maßnahme zunächst das Bremsventil des defekten Rades geschlossen wird, um einem Bremsflüssigkeitsverlust im Bremssystem vorzubeugen. Dieser Maßnahme liegt der Gedanke zugrunde, dass eine erhöhte Wahrscheinlichkeit einer beschädigten Bremsleitung vorliegt, falls bei einem Unfall ein Rad bzw. die Radaufhängung so schwer beschädigt wird, dass das Rad blockiert.

Nach dem Schließen des Bremsventils des defekten Rades wird zum nächsten Verfahrensschritt 23 fortgefahren, gemäß dem ein fahrerunabhängiger Bremseingriff durchgeführt wird. Die Stärke, Dauer sowie die Auswahl des abzubremsenden Rades hängen von verschiedenen Kriterien ab. Ist beispielsweise ein vorderes Rad defekt, wird zweckmäßigerweise das gegenüberliegende Rad auf der gleichen Achse fahrerunabhängig abgebremst, insbesondere ebenfalls blockiert, um ein durch einseitige Bremsung erzeugtes Giermoment zu verringern bzw. zu vermeiden und das Fahrzeug automatisch abzubremsen. Auf eine ABS-Regelung wird dabei zweckmäßigerweise verzichtet, um an beiden Vorderrädern möglichst gleiche Bremskräfte zu erzeugen. Die Hinterräder können entweder ohne fahrerunabhängigen Bremseingriff bleiben, um eine Verringerung der Seitenkraft zu vermeiden und damit die Richtungsstabilität zu fördern, oder aber, gemäß alternativer Ausführung, ebenfalls abgebremst werden, um das Fahrzeug möglichst schnell zum Stillstand zu bringen. Im Falle eines fahrerunabhängigen Bremseingriffes an den Hinterrädern werden diese aber in der Regel nicht blockiert, um ein Mindestmaß an Fahrzeugstabilität aufrechtzuerhalten. Gleichwohl ist es auch in dieser Situation möglich, die Hinterräder durch automatischen Bremseingriff zu blockieren.

Ist ein Hinterrad von einem Defekt betroffen, beispielsweise im Falle einer versetzten Heckkollision, so ist das Fahrzeug aufgrund der deutlich reduzierten Seitenkraft der Hinterachse schwer oder gar nicht zu stabilisieren. In dieser Situation wird das gegenüberliegende Hinterrad ebenfalls blockiert, um das Giermoment zu kompensieren. Da hier durch die Seitenführungskraft an der Hinterachse zusätzlich reduziert wird, muss das Fahrzeug schnellstmöglich zum Stillstand gebracht werden, was über ein unabhängiges Blockieren der Vorderräder erreicht wird.

Das in Fig. 2 beschriebene Verfahren bezieht sich auf verhältnismäßig schwere Kollisionen, bei denen mindestens eines der Fahrzeugräder aufgrund der Schwere der Beschädigungen blockiert wird. Grundsätzlich ist das Verfahren aber auch auf minderschwere Kollisionen anwendbar, bei denen ein Rad nicht blockiert wird, aber die Umdrehung des Rades eingeschränkt ist. In diesem Fall erfolgt eine Überprüfung der Raddrehzahlen auf eine unzulässig hohe Reduzierung der Umfangsgeschwindigkeit.

Des Weiteren kann es zweckmäßig sein, zusätzliche Plausibilisierungsbedingungen abzuprüfen, um einen Defekt der Raddrehzahlsensoren auszuschließen. Die Plausibilisierung kann zum einen anhand der zuvor ermittelten Kollisionsrichtung durchgeführt werden, indem überprüft wird, ob die reduzierte Raddrehzahl bzw. das blockierte Rad auch an der Stelle liegt, an der die Deformation des Fahrzeuges aufgetreten ist, oder anhand der Überprüfung des Reifendrucks des defekten Rades, sofern im Fahrzeug Reifendrucksensoren vorgesehen sind, da eine Beschädigung eines Rades oft mit einem Reifendruckverlust einhergeht.

## Patentansprüche

1. Verfahren zur Einstellung einer Bremsanlage in einem Fahrzeug (1), bei dem eine Kollision des Fahrzeugs (1) detektiert und im Falle einer Kollision ein fahrerunabhängiger Bremseingriff durchgeführt wird, **dadurch gekennzeichnet, dass**
- nach einer Kollision überprüft wird, ob die Radrehzahl eines Rades (2, 3, 4, 5) soweit reduziert ist, dass die Reduzierung der Radrehzahl einen Drehzahlreduktionsgrenzwert überschreitet, oder ob das Rad blockiert ist,
- im Falle, dass die Reduzierung der Radrehzahl einen Drehzahlreduktionsgrenzwert überschreitet oder eines blockierten Rades mindestens ein weiteres Rad (2, 3, 4, 5) im Fahrzeug (1) zur Verminderung der Destabilisierung abgebremst wird.

2. Verfahren nach Anspruch 1,
**dadurch gekennzeichnet, dass** das gegenüberliegende Rad (2, 3, 4, 5) auf der gleichen Achse abgebremst wird.

3. Verfahren nach Anspruch 1 oder 2,
**dadurch gekennzeichnet, dass** das abzubremsende Rad (2, 3, 4, 5) auf die gleiche Raddrehzahl wie das beschädigte Rad (2, 3, 4, 5) abgebremst wird.

4. Verfahren nach einem der Ansprüche 1 bis 3,
**dadurch gekennzeichnet, dass** nur beim Blockieren eines Rades (2, 3, 4, 5) mindestens ein weiteres Rad (2, 3, 4, 5) abgebremst und insbesondere durch einen Bremseingriff zum Blockieren gebracht wird.

5. Verfahren nach einem der Ansprüche 1 bis 4,
**dadurch gekennzeichnet, dass** im Falle einer Kollision mit Beschädigung eines Hinterrades alle nichtbeschädigten Räder (2, 3, 4, 5) abgebremst, insbesondere blockiert werden.

6. Verfahren nach einem der Ansprüche 1 bis 5,
**dadurch gekennzeichnet, dass** mittels der Fahrzeugsensorik die Kollisionsrichtung und/oder der Auftreffort ermittelt wird.

7. Verfahren nach einem der Ansprüche 1 bis 6,
**dadurch gekennzeichnet, dass** mittels der Fahrzeugsensorik die Kollisionsschwere ermittelt wird, insbesondere anhand der bei einer Kollision auftretenden Beschleunigungen..

8. Verfahren nach Anspruch 6 oder 7,
**dadurch gekennzeichnet, dass** der ermittelte Auftreffort und/oder die Kollisionsschwere zur Plausibilierung eines erkannten Raddefektes herangezogen wird.

9. Verfahren nach einem der Ansprüche 1 bis 8,
**dadurch gekennzeichnet, dass** der Reifendruck des defekten Rades (2, 3, 4, 5) gemessen und zur Plausibilierung eines erkannten Raddefektes herangezogen wird.

10. Verfahren nach einem der Ansprüche 1 bis 9,
**dadurch gekennzeichnet, dass** nach einer erkannten Kollision das Bremsflüssigkeitseinlassventil des beschädigten Rades (2, 3, 4, 5) zur Vermeidung eines Bremsflüssigkeitsverlustes geschlossen wird.

11. Regel- bzw. Steuergerät zur Durchführung des Verfahrens nach einem der Ansprüche 1 bis 10.

12. Regel- bzw. Steuergerät nach Anspruch 11,
**dadurch gekennzeichnet, dass** das Regel- bzw. Steuergerät das Steuergerät der Fahrdynamikregelung (z. B. ESP Elektronisches Stabilitätsprogramm) (7) ist.

13. Fahrzeug mit einem Regel- bzw. Steuergerät nach Anspruch 11 oder 12, **dadurch gekennzeichnet, dass** das Regel- bzw. Steuergerät zumindest annähernd in der Fahrzeugmitte positioniert ist.

## Claims

1. Method for adjusting a brake system in a vehicle (1), in which a collision of the vehicle (1) is detected, and in the event of a collision a braking intervention which is independent of a driver is carried out, **characterized in that**
- after a collision it is checked whether the rotational speed of a wheel (2, 3, 4, 5) is reduced to such an extent that the reduction of the rotational speed exceeds a rotational speed reduction limiting value or whether the wheel is locked,
- in the event of the reduction of the wheel rotational speed exceeding a rotational speed reduction limiting value or in the event of a locked wheel, at least one further wheel (2, 3, 4, 5) in the vehicle (1) is braked in order to reduce the destabilization.

2. Method according to Claim 1,
**characterized in that** the opposite wheel (2, 3, 4, 5) on the same axle is braked.

3. Method according to Claim 1 or 2,
**characterized in that** the wheel (2, 3, 4, 5) to be braked is braked to the same wheel rotational speed as the damaged wheel (2, 3, 4, 5).

4. Method according to one of Claims 1 to 3,
**characterized in that** only when a wheel (2, 3, 4, 5) locks is at least one further wheel (2, 3, 4, 5) braked, and in particular caused to lock by braking intervention.

5. Method according to one of Claims 1 to 4,
**characterized in that** in the case of a collision with damage to a rear wheel all the non-damaged wheels (2, 3, 4, 5) are braked, in particular locked.

6. Method according to one of Claims 1 to 5,
**characterized in that** the collision direction and/or the impact location are/is determined by means of the vehicle sensor system.

7. Method according to one of Claims 1 to 6,
**characterized in that** the severity of the collision is determined by means of the vehicle sensor system, in particular on the basis of the accelerations occurring in the event of a collision.

8. Method according to Claim 6 or 7,
**characterized in that** the impact location which is determined and/or the severity of the collision are/is used to check the plausibility of a detected wheel defect.

9. Method according to one of Claims 1 to 8,
**characterized in that** the tyre pressure of the defective wheel (2, 3, 4, 5) is measured and used to check the plausibility of a detected wheel defect.

10. Method according to one of Claims 1 to 9,
**characterized in that** after a collision has been detected, the brake fluid inlet valve of the damaged wheel (2, 3, 4, 5) is closed in order to avoid a loss of brake fluid.

11. Closed- and/or open-loop control device for carrying out the method according to one of Claimss 1 to 10.

12. Closed-loop and/or open-loop control device according to Claim 11, **characterized in that** the closed-loop and/or open-loop control device is the open-loop control device of the vehicle movement dynamics controller (for example ESP Electronic Stability Programme) (7).

13. Vehicle having a closed-loop and/open-loop control device according to Claim 11 or 12, **characterized in that** the closed-loop and/open-loop control device is positioned at least approximately in the centre of the vehicle.

## Revendications

1. Procédé pour l'ajustement d'une installation de freinage dans un véhicule (1), dans lequel une collision du véhicule (1) est détectée et dans le cas d'une collision, une intervention du frein indépendante du conducteur a lieu, **caractérisé en ce que**
- après une collision, on vérifie si la vitesse de rotation de roue d'une roue (2, 3, 4, 5) est réduite dans une mesure telle que la réduction de la vitesse de rotation de roue dépasse une valeur limite de réduction de vitesse de rotation, ou si la roue est bloquée,
- au cas où la réduction de la vitesse de rotation de roue dépasse une valeur limite de réduction de vitesse de rotation ou dans le cas d'une roue bloquée, au moins une autre roue (2, 3, 4, 5) du véhicule (1) est freinée pour réduire la déstabilisation.

2. Procédé selon la revendication 1,
**caractérisé en ce que** la roue opposée (2, 3, 4, 5) sur le même essieu est freinée.

3. Procédé selon la revendication 1 ou 2,
**caractérisé en ce que** la roue à freiner (2, 3, 4, 5) est freinée à la même vitesse de rotation de roue que la roue endommagée (2, 3, 4, 5).

4. Procédé selon l'une quelconque des revendications 1 à 3,
**caractérisé en ce que** seulement dans le cas d'un blocage d'une roue (2, 3, 4, 5), au moins une autre roue (2, 3, 4, 5) est freinée et en particulier est amenée à un blocage par une intervention de freinage.

5. Procédé selon l'une quelconque des revendications 1 à 4,
**caractérisé en ce que** dans le cas d'une collision avec endommagement d'une roue arrière, toutes les roues non endommagées (2, 3, 4, 5) sont freinées, en particulier sont bloquées.

6. Procédé selon l'une quelconque des revendications 1 à 5,
**caractérisé en ce que** l'on détermine au moyen d'un système de capteurs du véhicule la direction de collision et/ou le lieu d'incidence.

7. Procédé selon l'une quelconque des revendications 1 à 6,
**caractérisé en ce que** l'on détermine la sévérité de la collision au moyen du système de capteurs du véhicule, notamment à l'aide des accélérations se produisant lors d'une collision.

8. Procédé selon la revendication 6 ou 7,
**caractérisé en ce que** le lieu d'incidence déterminé et/ou la sévérité de la collision sont utilisés pour un calcul de plausibilité d'un défaut de roue reconnu.

9. Procédé selon l'une quelconque des revendications 1 à 8,
**caractérisé en ce que** la pression du pneu de la roue défectueuse (2, 3, 4, 5) est mesurée et est utilisée pour un calcul de plausibilité d'un défaut de roue reconnu.

10. Procédé selon l'une quelconque des revendications 1 à 9,
**caractérisé en ce qu'**après une collision reconnue, la soupape d'admission de liquide de frein de la roue endommagée (2, 3, 4, 5) est fermée pour éviter une perte de liquide de frein.

11. Appareil de régulation ou de commande pour mettre en oeuvre le procédé selon l'une quelconque des revendications 1 à 10.

12. Appareil de régulation ou de commande selon la revendication 11,
**caractérisé en ce que** l'appareil de régulation ou de commande est l'appareil de commande de la régulation de la dynamique de conduite (par exemple le programme de stabilité électronique ESP) (7).

13. Véhicule comprenant un appareil de régulation ou de commande selon la revendication 11 ou 12, **caractérisé en ce que** l'appareil de régulation ou de commande est positionné au moins approximativement au centre du véhicule.
